# EUROPÄISCHE PATENTSCHRIFT

(11) **EP 2 931 174 B1**
(45) Veröffentlichungstag und Bekanntmachung des Hinweises auf die Patenterteilung: **03.08.2022**
(21) Anmeldenummer: 13808008.0
(22) Anmeldetag: 17.12.2013
(51) Int. Cl.: A61C 19/045

(54) **OKKLUSIONOM**
OCCLUSION DETERMINATION DEVICE
MASQUE OPAQUE POUR OCCLUSION

(30) Priorität: 17.12.2012 EP 12197441
(43) Veröffentlichungstag der Anmeldung: 21.10.2015
(73) Patentinhaber: Ivoclar Vivadent AG, 9494 Schaan (LI)
(72) Erfinder: BAASKE, Thomas, 9472 Grabs (CH); FREI, Christian, 39025 Naturns (IT); ZIMMERLING, Frank, 9494 Schaan (LI); WATZKE, Ronny, 6800 Feldkirch (AT)
(74) Vertreter: Baronetzky, Klaus
(86) Internationale Anmeldenummer: PCT/EP2013/076895
(87) Internationale Veröffentlichungsnummer: WO 2014/095857

(56) Entgegenhaltungen:
- WO-A2-92/02192
- WO-A2-92/02192
- FR-A1- 2 548 532
- FR-A1- 2 548 532
- JP-A- S 568 048
- US-A- 4 261 696
- US-A- 4 261 696
- US-A1- 2008 057 466
- US-A1- 2008 057 466

## Beschreibung

Die Erfindung betrifft ein Okklusionom, gemäß dem Oberbegriff von Anspruch 1.

Vorrichtungen zur Übertragung von Patientendaten für die Erstellung von Prothesen sind seit langem bekannt. So ist beispielsweise aus der DE 33 47 830 A1 eine entsprechende Vorrichtung mit einer Bissgabel bekannt, bei welcher der Referenzbogen mit einer Skala versehen ist, über welche der horizontale Versatz zur Kondylengelenkachse feststellbar sein soll. Diese Lösung geht gemäß Seite 5 von einer parallelen Erstreckung der Okklusionsebene zur Bipupillarlinie aus.

Tatsächlich kann hier jedoch eine geringe Winkelabweichung bestehen, und es ist demensprechend bekannt geworden, ein sogenanntes Bipupillargelenk einzuführen, das diese Winkelabweichung berücksichtigt. Ein Beispiel für eine derartige Lösung ist aus der DE 30 32 913 A1 ersichtlich.

Das dortige Gelenk erlaubt eine Anpassung der Bissgabel um eine horizontale Achse, die sich senkrecht zur Kondylenachse erstreckt, wobei allerdings keine Erfassung der Winkelstellung vorgesehen ist.

Ferner ist aus der JP-S56 8048 A1 ein Okklusionom mit einem Extraoralbogen bekannt, das ein Campergelenk und ein Bipupillargelenk aufweist. Die Bedienung ist jedoch umständlich und fehleranfällig.

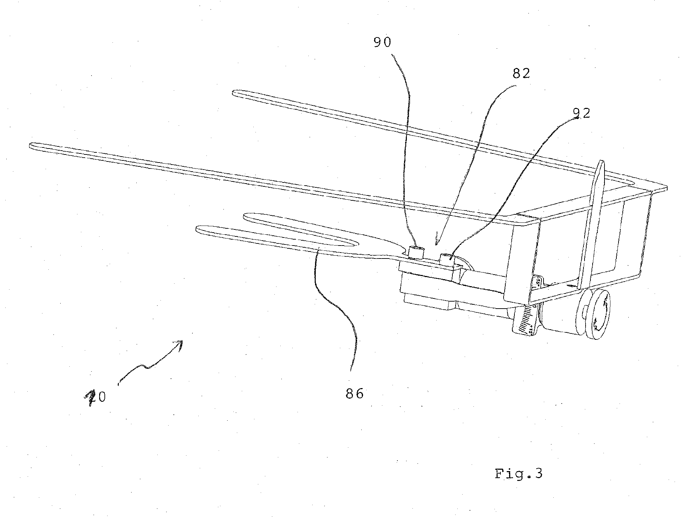

Zahlreiche weitere entsprechende Vorrichtungen sind vorgeschlagen worden. Aus etwas neuerer Zeit sei auf die US 5 154 608 A1 verwiesen, die ein Gerät zeigt, das der Okklusionsanalyse dient und mit entsprechenden Skalen für die Erfassung des horizontalen Versatzes versehen ist, wie es beispielsweise aus Figur 3 und der zugehörigen Beschreibung ersichtlich ist.

In der dentalen Praxis werden jedoch auch heutzutage immer noch Referenzbögen verwendet, die mit Bissgabeln verbunden sind und als Bissgabelset bezeichnet werden, und zwar entweder über ein Gelenk oder einstückig, wobei die Bissgabelsets häufig eine reduzierte Länge aufweisen. Die Bissgabelsets sind vielfach aus Blechstreifen ausgebildet, die sich horizontal erstrecken. Es ist in das Belieben des Zahnarzt oder ggf. des Zahntechnikers gestellt, ob er die Blechstreifen ggf. nach seinen Wünschen verbiegen will, oder beispielsweise mittels eines Hölzchens "verlängern" will, bis das Kondylengelenk erreicht ist. Derartige Lösungen sind zwar kostengünstig, jedoch ergonomisch und von der Exaktheit der Passung her unbefriedigend.

Die sog. Campersche Ebene verläuft bekanntlich durch den Subnasalpunkt und Tragus. Sie wird in vielen Fällen als parallel zur Okklusionsebene angesehen, wobei bei genauerer Vermessung jedoch auch Winkelabweichungen festgestellt werden können, die von Patient zu Patient unterschiedlich sind.

Bei unbezahnten Patienten wird mit einer Wachsschablone gearbeitet, die auf einen Mittelwert als Erfahrungswert eingestellt wird, wozu ein Okklusionom herangezogen werden kann.

Die Erfassung von Winkelabweichungen ist mit den bislang bekannten Okklusionomen nur hinsichtlich eines Winkels quer zur Kondylengelenkrichtung, also entsprechend dem Bipupillargelenk, möglich, sofern hier eine entsprechende Winkelerfassung, wie bei einer Skala mit einem Zeiger, realisiert ist.

Ferner sind Hilfsvorrichtungen für Artikulatoren vorgeschlagen worden, die Skalen aufweisen, die etwaigen Abweichungen von üblichen Werten Rechnung tragen sollen. Teilweise kommen hierbei auch Hilfsbügel zum Einsatz.

Demgegenüber liegt der Erfindung die Aufgabe zugrunde, ein einfaches und leicht anzuwendendes Okklusionom gemäß dem Oberbegriff von Anspruch 1 bereitzustellen, das jedoch eine Mehrzahl von patiententypischen Besonderheiten zu erfassen vermag, ohne dass durch eine Vielzahl von Einstellmöglichkeiten Fehlbedienungen zu befürchten wären.

Diese Aufgabe wird erfindungsgemäß durch Anspruch 1 gelöst. Vorteilhafte Weiterbildungen ergeben sich aus den Unteransprüchen.

Mit den Merkmalen des erfindungsgemäßen Okklusionoms lässt sich die individuelle Okklusionsebene eines Patienten besonders genau und einfach erfassen, ohne dass die Realisierung und die Anwendung des erfindungsgemäßen Okkusionoms aufwendig wäre. Durch die vertikale Verschiebung des Extraoralbogens zeigen deren Enden zum Tragion und/oder zu den Kondylengelenken, so dass insofern eine Ausrichtung des Extraoralbogens gegenüber der bekannten verkürzten Ausgestaltung vereinfacht ist. Hierzu beträgt die Länge eines Extraoralbogen-Seitenschenkels zwischen 7cm und 23cm, bevorzugt etwa 15cm bei Erwachsenen. Es ist insofern unschädlich, wenn die Enden des Extraoralbogens über das Tragus hinausragen.

Der vertikale Versatz zwischen der Okklusionsebene und dem erfindungsgemäß angeordneten Extraoralbogen ist bevorzugt auf einem Wert zwischen 20 und 30mm fest eingestellt und beträgt mittelwertig 25mm. Es entspricht dem typischen Versatz zwischen Okklusionsebene und Camperscher Ebene.

Alternativ ist es auch möglich, den vertikalen Versatz einstellbar zu machen, wobei dann wiederum die "Nullstellung" der Einstellung 25mm beträgt; die Einstellskala kann sich dann beispielsweise über einen Bereich zwischen 20mm und 30mm erstrecken.

Erfindungsgemäß lässt sich über ein an sich bekanntes Bipupillargelenk, das zentral unten mittig vorne in dem Okklusionom ausgebildet ist, der Winkel zwischen der Bipupillarlinie und der Okklusionsebene feststellen, erfassen und messen. Hierzu ist in erfindungsgemäß günstiger Weise ein Zeiger, ein Stab oder ein beliebiges anderes sich vertikal nach oben erstreckendes Element vorgesehen, das mit dem Extraoralbogen fest verbunden ist, und sich exakt senkrecht zu diesem erstreckt. Der Zeiger wird nun bevorzugt zu einem zentralen Punkt in der Sagittalebene des Patienten ausgerichtet.

Hierzu kann beispielsweise vorab mit einem wasserlöslichen Filzstift ein geeigneter Punkt auf der Nase oder Stirn des Patienten markiert werden, auf den der Zeiger dann ausgerichtet wird.

Erfindungsgemäß günstig ist es nun, dass an dem Bipupillargelenk ein Messzeiger gepaart mit einer Skala angebracht ist, der die Erfassung des Winkelversatzes zwischen der Okklusionsebene und der Bipupillarlinie ermöglicht, und zwar um die in der Sagittalebene liegende horizontale Achse. Die Campersche Ebene erstreckt sich typischerweise parallel zur Bipupillarlinie. Hierbei kann der Messzeiger entweder an dem Bissgabelanschluss oder an dem Extraoralbogen - und damit dem Zeiger - angebracht sein, und die Skala an dem entsprechend anderen Teil. Die Skala ist bevorzugt in Winkelgrad eingeteilt und erstreckt sich in an sich bekannter Weise kreisförmig.

Erfindungsgemäß lässt sich damit in Hinblick auf die langen "Hebelarme" des Extraoralbogens die Winkelabweichung bereits um die genannte Achse in der Sagittalebene exakter als bislang bestimmen, wobei es sich versteht, dass die Winkelerfassung in beliebiger geeigneter Weise erfolgen kann, beispielsweise mittels Kombination aus Messzeiger und Skala, aber auch per Digitalanzeige, entsprechend denjenigen Digitalanzeigen, wie sie bei elektronischen Schiebelehren bekannt geworden sind, oder auch per Dehnungsmessstreifen und damit per Fernerfassung.

In weiterer vorteilhafter Ausgestaltung ist es vorgesehen, im Bereich des Bissgabelansatzes ein Campergelenk vorzusehen. Die Achse dieses Campergelenks liegt in der Frontalebene und erstreckt sich insofern parallel zur Kondylengelenkachse. Mit dem Campergelenk ist erfindungsgemäß die Schrägstellung der Camperschen Ebene gegenüber der Okklusionsebene erfassbar und messbar. Hierzu weist das Campergelenk einen Messzeiger und eine Skala auf, die an je einander gegenüberliegenden Gelenkteilen angebracht sind. Der Bissgabelansatz ist hiermit gegenüber dem Extraoralbogen um diese Achse verschwenkbar, und die Winkelstellung um diese Achse ist erfassbar.

Für die Erfassung wird der Bissgabelansatz mit einer Bissgabel bestückt. Die Bissgabel erstreckt sich bei Einführung in den Mund des Patienten in der Okklusionsebene.

Beim Einsatz des erfindungsgemäßen Okklusionoms lässt sich damit bevorzugt die Schrägstellung der Okklusionsebene gegenüber der Camperschen Ebene in zwei Dimensionen erfassen, wobei der Extraoralbogen als Referenzelement dient.

Es versteht sich, dass die Gelenkteile der beiden erfindungsgemäßen Gelenke je gegeneinander verschwenkbar sind, aber mit einer Haftreibung in der einmal eingestellten Schwenkstellung verbleiben können. Hierdurch verbleibt bei der Entnahme der Bissgabel aus dem Mund des Patienten jedes Gelenk in der eingestellten Stellung, so dass über den betreffenen Messzeiger und die zugehörige Skala die Winkelwerte leicht ablesbar sind.

Alternativ können die Gelenke auch mit einer Rändelmutter versehen sein, die es erlaubt, die Andruckkraft der Gelenkteile aneinander feinfühlig einzustellen und auch eine Fixierung vorzunehmen.

Anstelle der Bissgabel kann an dem Bissgabelansatz auch eine Aufnahme für einen Abdruckmassenträger angebracht sein, und die Erfassung kann dann auch unmittelbar bei Abdrucknahme erfolgen. Als Abdruckmassenträger kann beispielsweise ein Abdrucklöffel verwendet werden oder ein Centric Tray der Firma Ivoclar Vivadent AG.

Erfindungsgemäß ist es günstig, wenn die Teile des Okklusionoms aus Metall, bevorzugt aus Blechstreifen gestanzt bzw. gefertigt sind. Das gesamte Okklusionom ist hierdurch dann auch autoklavierbar und dementsprechend leicht zu sterilisieren.

Durch Rändelmuttern oder geeignete Schraubbolzen lassen sich die Gelenkteile auch bei Bedarf voneinander trennen und auswechseln, was der Einfachheit der Handhabbarkeit zugute kommt.

Durch den Bissgabelansatz mit wechselbaren Bissgabeln und/oder Abdruckmassenträger lassen sich auch unterschiedliche Kiefersituation einzelner Patienten berücksichtigen. Nachdem der Extraoralbogen durch einen Schraubbolzen an dem Okklusionom im Übrigen befestigt ist, ist es auch hier möglich, bei Bedarf unterschiedliche Größen bereitzuhalten und einzusetzen.

Weitere Vorteile, Einzelheiten und Merkmale ergeben sich aus der nachfolgenden Beschreibung der Erfindung anhand der Zeichnungen.

Es zeigen:
- Fig. 1: eine schematische perspektivische Ansicht einer ersten Ausführungsform eines erfindungsgemäßen Okklusionoms;
- Fig. 2: das Okklusionom gemäß Fig. 1 in einer anderen perspektivischen Ansicht;
- Fig. 3: eine weitere Ausführungsform eines erfindungsgemäßen Okklusionoms (ebenfalls in perspektivischer Ansicht);
- Fig. 4: das Okklusionom gemäß Fig. 3 in einer anderen perspektivischen Ansicht;
- Fig. 5: das Okklusionom gemäß Fig. 3 in Seitenansicht;
- Fig. 6: das Okklusionom gemäß Fig. 3 in Draufsicht;
- Fig. 7: das Okklusionom gemäß Fig. 3 in einer anderen Seitenansicht;
- Fig. 8: das Okklusionom gemäß Fig. 3 in Unteransicht;
- Fig. 9: das Okklusionom gemäß Fig. 3 in Frontansicht; und
- Fig. 10: eine schematische Draufsicht auf eine weitere Ausführungsform eines erfindungsgemäßen Okklusionoms

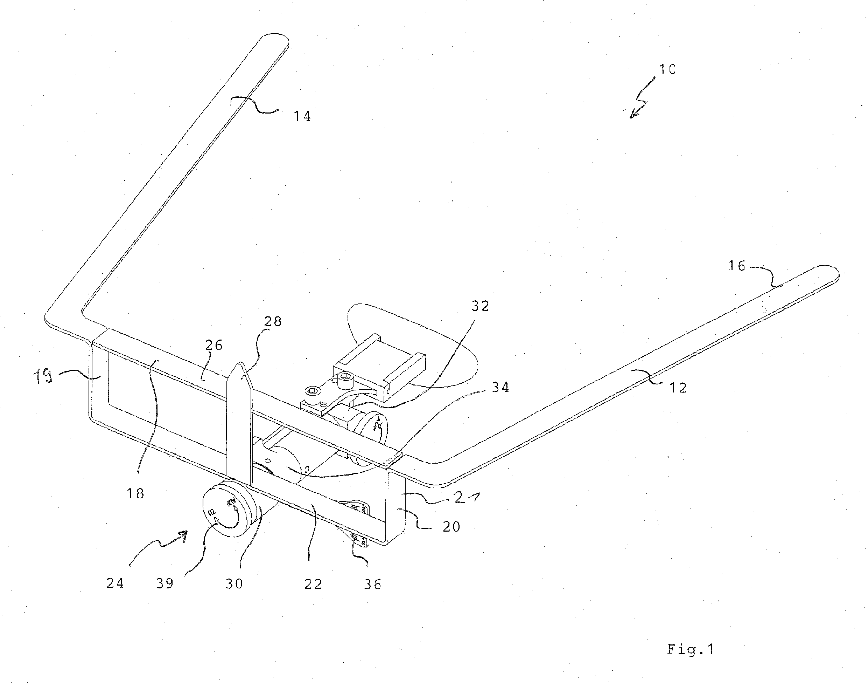

Das in Fig. 1 dargestellte Okklusionom 10 weist einen Extraoralbogen 12 als Referenzelement auf, der sich im Wesentlichen U-förmig erstreckt und hierzu zwei Seitenschenkel 14, 16 und einen Mittelschenkel 18 aufweist. Die Seitenschenkel 14 und 16 erstrecken sich divergierend voneinander in einem Winkel von ca. 25° zueinander.

In einer modifizierten Ausgestaltung des erfindungsgemäßen Okklusionoms, die hier nicht dargestellt ist, sind die Seitenschenkel 14 und 16 je geienkig gegenüber dem Mitteischenkel 18 gelagert. Das diesbezügliche Gelenk kann sehr einfach gehalten sein und beispielsweise zwei Bohrungen aufweisen, an denen einander zugewandte Enden von Seiten- und Mittelschenkel vorgesehen sind, welche Bohrungen miteinander fluchten und von einem geeignetem Befestigungselement wie einer Niete durchtreten sind.

Über entsprechende Anschläge lässt sich die Einstellbarkeit auch in beliebiger geeigneter Weise beschränken, beispielsweise auf einen Winkelbereich zwischen 45° und 90°, je zwischen dem Mittelschenkel 18 und dem zugehörigen Seitenschenkel 14 bzw. 16.

Der Extraoralbogen 12 ist in Form eines Metallstreifens ausgebildet, beispielweise aus nicht-rostendem Stahl. Der Metallstreifen ist im dargestellten Ausführungsbeispiel 8mm breit und 1mm stark, so dass die erwünschte Eigensteifheit vorliegt.

Alternativ kann der Extraoralbogen 12 und bei Bedarf auch das Okklusionom im Übrigen auch aus einem biegesteifen Kunststoff, bei Bedarf aus einem faserverstärkten Kunststoff, ausgebildet sein, oder aus einem beliebigen anderen geeigneten Material, das gut zu desinfizieren ist.

Der Mittelschenkel 18 des Extraoralbogens 12 weist einen Höhenversatzabschnitt 20 auf, der ebenfalls aus Stahlband besteht und im Grunde quaderförmig ausgestaltet ist. Insofern bildet der Höhenversatzabschnitt 20 eine Art Rahmen für den Extraoralbogen 12. Der Höhenversatzabschnitt 20 weist zwei Vertikalschenkel 19 und 21 auf. In dem dargestellten Ausführungsbeispiel ist das Stahlband dort in vertikaler Richtung, also im Sinne eines aufrechtstehenden U, gebogen, wobei zwischen die Enden der Seitenschenkel dieses U ein weiteres Stahlband 26 eingeschweißt ist, das im Grunde einen wesentlichen Teil des horizontalen Mittelschenkels 18 des Extraoralbogens 12 bildet.

Der Höhenversatzabschnitt weist einen Anschlussschenkel 22 auf, an dem ein Bipupillargelenk 24 gelagert ist. Zwischen diesem Anschlussschenkel 22 und dem eingeschweißten Stahlband 26 erstreckt sich eine Zeiger 28. Der Zeiger 28 erstreckt sich nach oben deutlich über das Stahlband 26 hinaus. Während in der Darstellung gemäß Fig. 1 der Zeiger 26 eine Länge von lediglich etwa 4cm aufweist, versteht es sich, dass bei Bedarf die Zeigerlänge wesentlich vergrößert werden kann, beispielsweise auch auf 10cm.

Der Höhenversatz zwischen dem Anschlussschenkel 22 und dem Stahlband 26, welches auf der Höhe der Seitenschenkel 14 und 16 des Extraoralbogen 12 liegt, beträgt im dargestellten Ausführungsbeispiel 25mm; ein anderer Wert zwischen 18mm und 32mm kann bei Bedarf auch eingesetzt werden.

Das Bipupillargelenk 24 weist ein mit dem Anschlussschenkel 22 verbundenes Gelenkteil 30 und ein mit einem Bissgabelanschluss 32 verbundenes Gelenkteil 34 auf. Das Gelenkteil 30 ist hierbei mit einem aus Fig. 1 nicht ersichtlichen Messzeiger verbunden, und das Gelenkteil 34 mit einer Skala 36, mit der der Messzeiger des Bipupillargelenks 24 entlanggeführt ist.

Eine Rändelmutter 39 erlaubt die Fixierung und das Lösen des Gelenks, entsprechend der Drehrichtung "auf" bzw. "zu", wie sie auf der Rändelmutter 39 markiert ist.

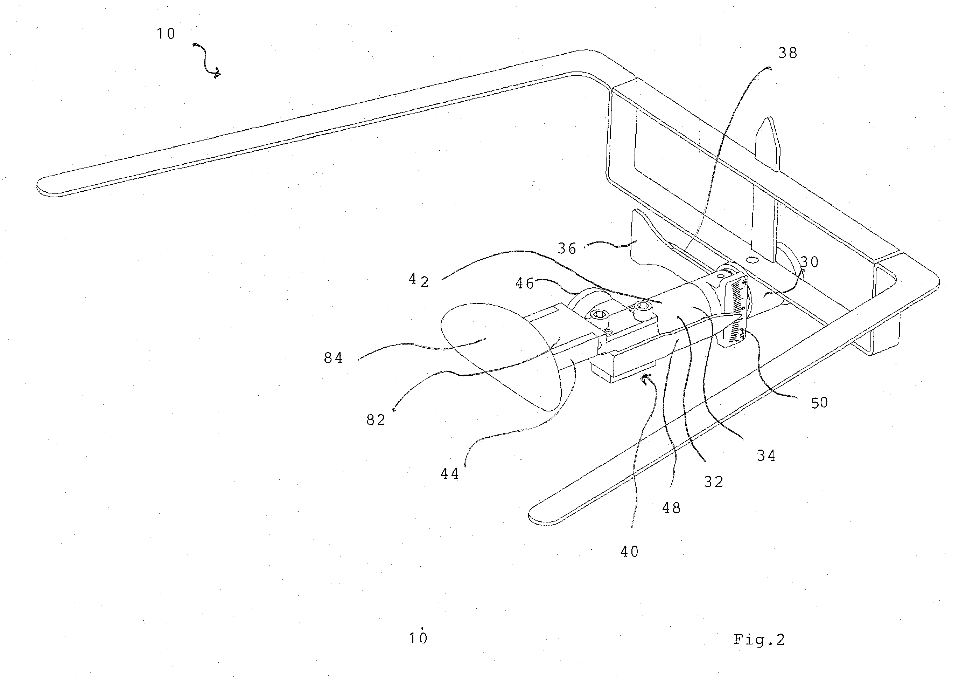

Aus Fig. 2 ist das Okklusionom 10 in einer perspektivischen Rückansicht in der Ausführungsform gemäß Fig. 1 ersichtlich. Gleiche Bezugszeichen weisen hier wie auch in den weiteren Figuren auf gleiche Teile hin.

Wie aus Fig. 2 ersichtlich ist, ist dem Gelenkteil 30 ein Messzeiger 38 zugeordnet und ist drehfest mit diesem verbunden. Die Skala 36 ist mit dem Gelenkteil 34 verbunden, wobei es sich versteht, dass die Anordnung auch andersherum gewählt sein kann.

Der Bissgabelansatz 32 weist in erfindungsgemäß besonders bevorzugter Ausgestaltung ein weiteres Gelenk, nämlich das Campergelenk 40 auf. Das Campergelenk 40 besteht wiederum aus einem ersten Teil 42 in Form eines Zapfens und einem zweiten Teil 44, die über eine Rändelmutter 46 miteinander verschraubt sind. Die Stellung der Rändelmutter 46 erlaubt die Einstellung der Reibkraft der Teile 42 und 44 zueinander.

In diesem Ausführungsbeispiel ist das Teil 44 mit einem zweiten Messzeiger 48 verbunden, und das Teil 42 mit einer zweiten Skala 50.

Die Ablesung der Stellung des Messzeigers 48 auf der Skala 50 erlaubt damit die Erfassung der Winkelstellung am Campergelenk 40, das sich mit seiner Achse parallel zur Kondylenachse erstreckt.

Der Bissgabelansatz 34 weist ferner einen Wechselanschluss 82 auf, in den bei der Ausgestaltung gemäß Fig. 2 eine Aufnahme 84 für einen Abdruckmassenträger (z.B. Abdrucklöffel, Centric Tray) aufgenommen ist.

Aus Fig. 3 ist ersichtlich, dass das Okklusionom 10 anstelle der Aufnahme 84 auch mit einer Bissgabel 86 ausgestattet sein kann. Hierzu erlaubt der Wechselanschluss 82 es, zwei Schraubbolzen 90 und 92 - oder in einer anderen Ausführungsform entsprechende Muttern - zu lösen, das betreffende Anschlussstück zu wählen und einzusetzen und dann die Schraubbolzen 90 und 92 wieder festzuschrauben. Durch die hier ausgebildete Anschlussfläche ist die Höhenlage und Winkelstellung je exakt vorgegeben, so dass auch bei unterschiedlich großen Bissgabeln die Okklusionsebene stets exakt erfasst wird.

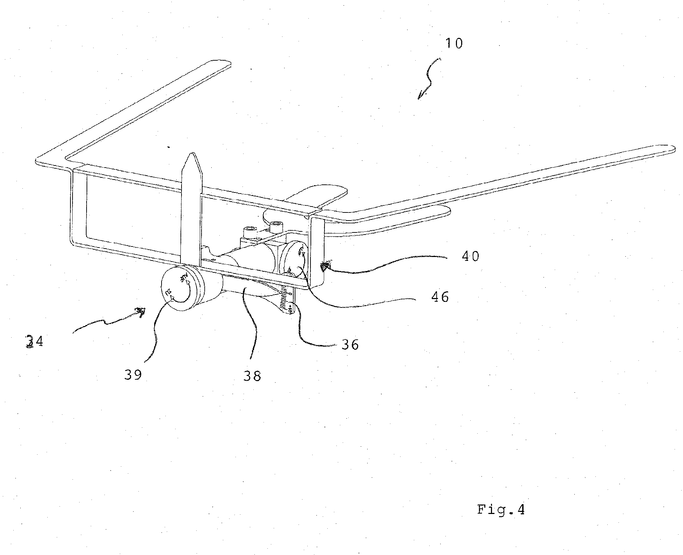

Aus Fig. 4 ist ersichtlich, dass für das Bipupillargelenk 24 und das Campergelenk 40 gleichartige Rändelmuttern 39 und 46 verwendet werden können.

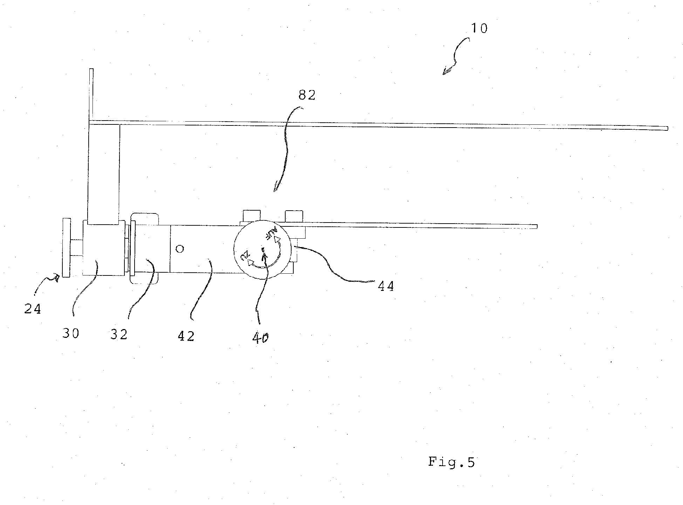

Aus Fig. 5 ist eine Seitenansicht eines erfindungsgemäßen Okklusionoms 10 von der linken Seite ersichtlich. Die Geienkteiie 30 und 32 sind als zylindrische Körper ausgebildet und insofern Teil des Bipupillargelenks 24. Das Teil 42 des Campergelenks 40 ist ebenfalls als zylindrisches Element ausgebildet, während das Teil 44 als Metallblock ausgebildet ist, auf dessen Oberseite die Anschlussfläche des Wechselanschlusses 82 ausgebildet ist.

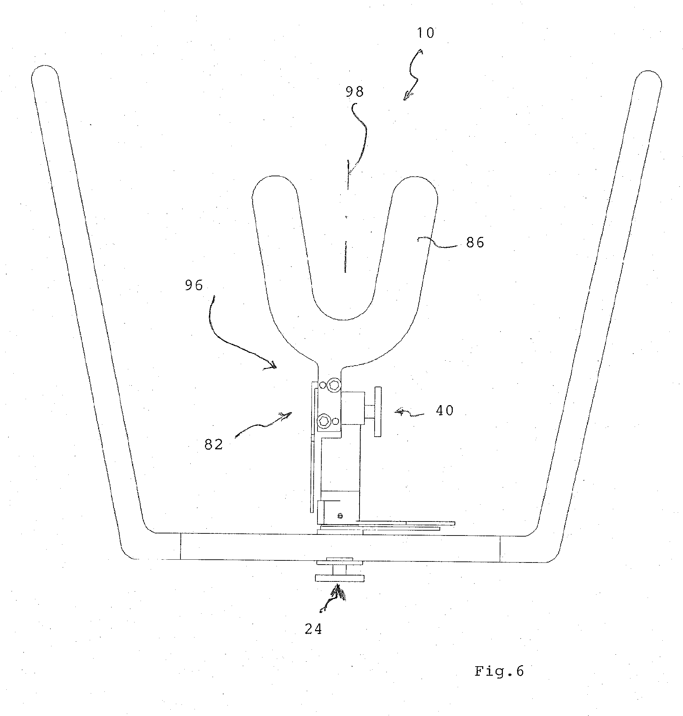

Aus Fig. 6 ist ein Okklusionom 10 in Draufsicht ersichtlich. Wie ersichtlich ist, ist ein Anschlusszapfen 96 des Wechselanschlusses 82 asymmetrisch leicht versetzt ausgebildet, um der Anschlussmöglichkeit an dem Campergelenk 40 Rechnung zu tragen. Es versteht sich, dass das Bipupillargelenk 24 exakt in der Sagittalebene 98 zu liegen kommen soll.

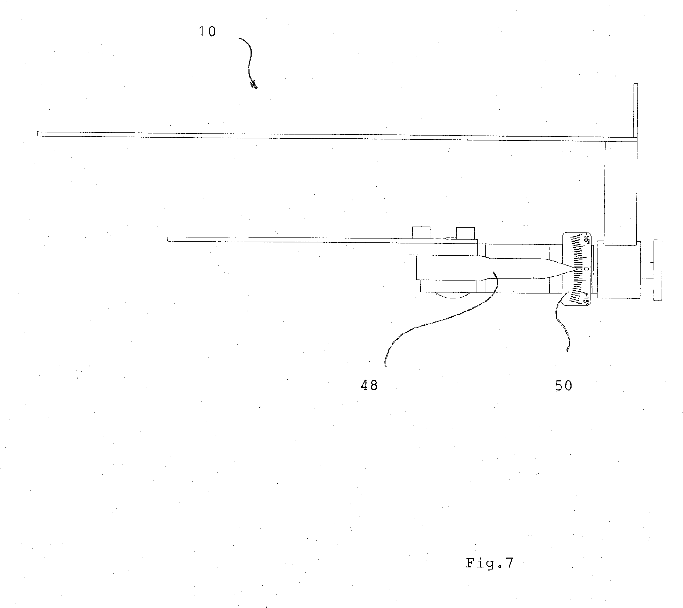

Aus Fig. 7 ist eine Seitenansicht des erfindungsgemäßen Okklusionoms 10 von rechts ersichtlich. Hier ist besonders gut die Skala 50 und der Messzeiger 48 in der gegenseitigen Anordnung ersichtlich; die erfasste Winkelstellung beträgt hier genau 0°. Der Messwinkelbereich liegt hier im Bereich zwischen -15° und +15°, wobei in aller Regel die relative Anordnung von Okklusionsebene und Camperebene deutlich weniger als +15° oder -15° voneinander abweichen.

Die Schwenkbeweglichkeit des Campergelenkes kann über Anschläge begrenzt sein, die den möglichen Schwenkwinkel in beliebiger geeigneter Weise beschränken. Beispielsweise kann ein maximaler Schwenkwinkel von +/- 30°, bezogen auf die horizontale Mittelstellung, vorgesehen sein, aber auch ein maximaler Schwenkwinkel von +/- 25° oder nur 20°. Der Schwenkwinkel sollte jedenfalls die Verschwenkung im Bereich der Skala 50 ermöglichen, und wenn die Skala sich über einen geringeren Bereich erstreckt, wie beispielsweise zwischen -7° und +9°, kann auch eine entsprechende Einschränkung des Schwenkwinkels vorgenommen werden.

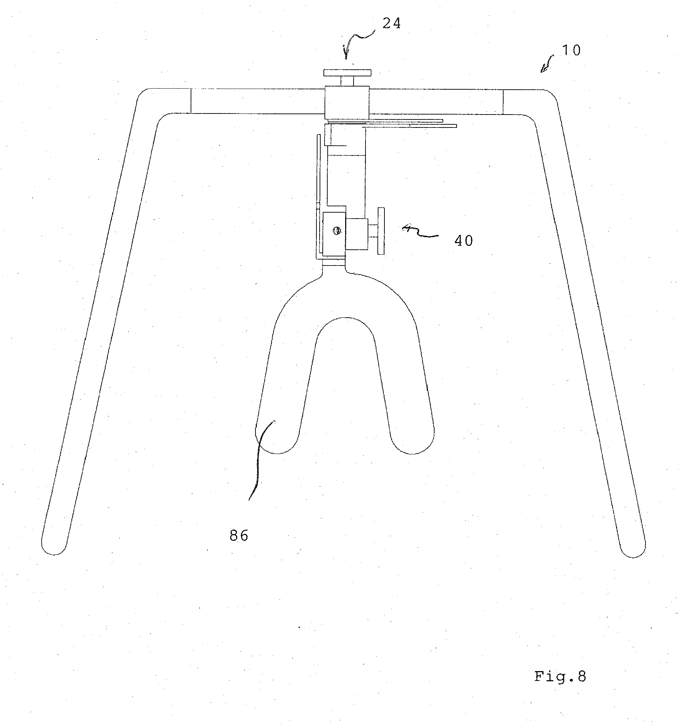

Aus Fig. 8 ist eine Unteransicht des erfindungsgemäßen Okklusionoms 10 ersichtlich. Hier ist ebenfalls ersichtlich, dass sich die Schwenkachsen des Campergelenks 40 und des Bipupillargelenks 24 senkrecht zueinander erstrecken.

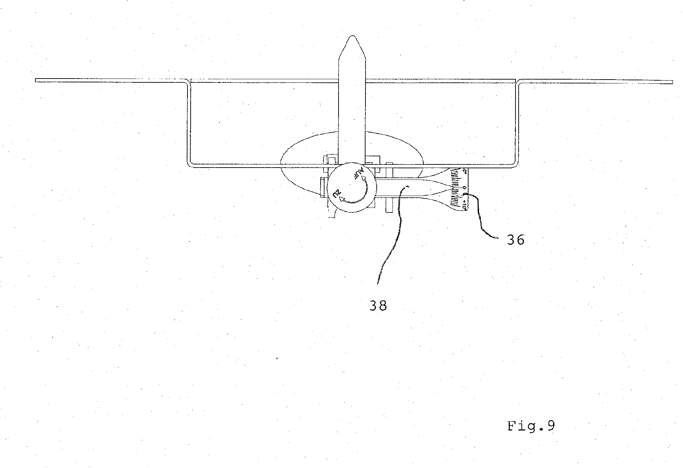

Die relative Anordnung des Messzeigers 38 und der Skala 36 ist aus Fig. 9 gut ersichtlich. Hier beträgt der eingetragene Anzeigebereich zwischen -10° und +10°, wobei auch hier die tatsächlich in der Praxis vorkommenden Werte deutlich innerhalb dieses Bereichs liegen.

Auch für das Bipupillar-Gelenk können Anschläge vorgesehen sein, die den Schwenkbereich auf Werte beschränken, die großzügiger als der Anzeigebereich der Skala 36 sind, wobei eine entsprechende Beschränkung aber nicht nötig ist.

In einer weiteren Ausgestaltung der Erfindung ist der vertikale Abstand zwischen dem Bissgabelansatz 34 und dem Extraoralbogen 12 einstellbar. Die Verstellbarkeit kann in mechanisch einfacher Weise realisiert sein, wobei eine Parallelführung der beiden Elemente zueinander bevorzugt ist. Eine entsprechende Lösung lässt sich beispielsweise mit einem Scherengelenk realisieren, wie es im Bauingeneurwesen verwendet wird. Der Verstellbereich kann dann zwischen 20mm und 30mm liegen.

In weiterer vorteilhafter Ausgestaltung sind Referenzelemente an dem Extraoralbogen 12 angebracht, bevorzugt an dessen Seitenschenkeln 12 und 16. Mit diesen Referenzpunkten lässt sich beispielsweise per optischer Erfassung die Lage des Extraoralbogen - und damit des Okklusionoms - erfassen, beispielsweise über an sich bekannte stereoskopische Maßnahmen, und damit auch die Relativlage des Okklusionoms zum Patienten.

In weiterer vorteilhafter Ausgestaltung ist es vorgesehen, an dem Bissgabelansatz 34 ein Lippenschild anzubringen. Hintergrund ist, dass bei unbezahnten Kiefern häufig die Oberlippe des Patienten nach innen fällt, was mit der Prothese kompensiert werden soll. Mit dem erfindungsgemäßen Oberlippenschild oder Lippenschild lässt sich die Lippenlage dann optimal einstellen bzw. zunächst erfassen; mit der später basierend auf dem Okklusionom-Ergebniss anzufertigen Prothese wird dann die Lippenlage festgelegt, insbesondere durch die horizontale Position der Zähne und/oder durch die Ausgestaltung des Zahnfleischmaterials der Prothese oberhalb der Zähne, das stärker oder weniger vorspringend realisiert sein kann.

Der Lippenschild kann entweder fest mit der Bissgabel verbunden an dem Bissgabelansatz angebracht sein, oder aber er kann verschieblich gegenüber diesen gelagert sein, bei Bedarf auch mit einer erfassbaren Stellung.

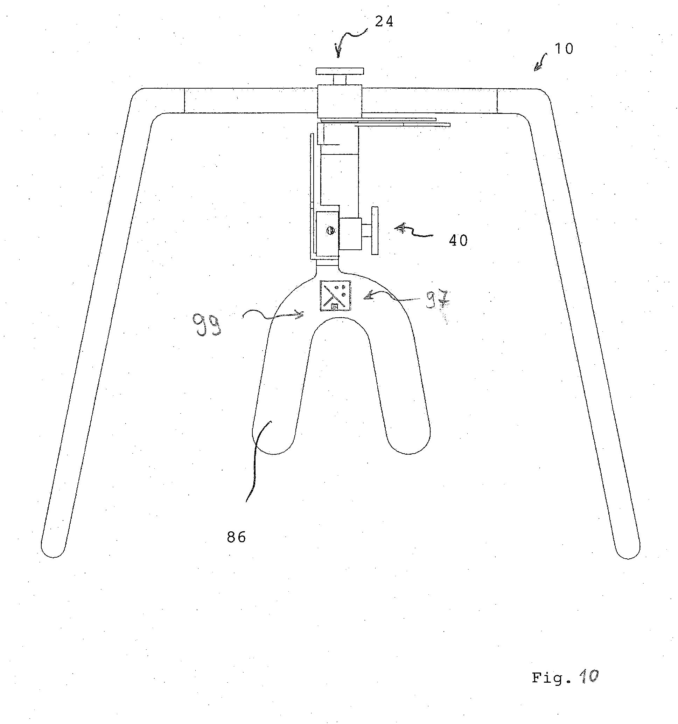

Aus Fig. 10 ist ersichtlich, in welcher Weise ein Okklusionom-Referenzelement 97 angebracht sein kann, das die exakte Lagebestimmung des Okklusionoms mit angebrachter Bissgabel ermöglicht.

Für die Bestimmung der Referenzposition kann als weiteres Hilfsmittel auch die Abdruckmasse nach Abdrucknahme verwendet werden. Bei der Anbringung eines Okklusionom-Referenzelements auf dem Abdruckmassenträger - oder gegebenenfalls auf der Abdruckmasse selbst - lässt sich so eine exakte Beziehung zwischen der Lage der Abdruckmasse - und damit dem Kiefer des Patienten - und dem Extraoralbogen 12 erstellen.

Ohne ein hierfür geeignetes Okklusionom-Referenzelement besteht die Gefahr, dass die Relativposition des Okklusionoms gegenüber dem Mundraum des Patienten unbestimmt ist.

Erfindungsgemäß ist es daher günstig, wenn nicht nur die relativen Winkel zwischen Abdruckmassenträger bzw. Bissgabel einerseits und Extraoralbogen 12 andererseits bestimmt werden können, sondern auch über das Okklusionom-Referenzelement 97 die Lage des Okklusionoms im Bezug auf den Mund des Patients, insbesondere beim Scannen.

Ein dreidimensionales Scannen ist jedoch für die Herstellung einer Vollprothese ausgesprochen günstig.

Durch Anbringung des Okklusionom-Referenzelements 97 auf der Bissgabel oder dem Bissgabelansatz, oder dem Abdruckmassenträger ist eine sehr genaue Referenzbestimmung möglich, denn wenn lediglich eine Werkzeugaufnahme für die Bissgabel das Referenzelement trägt und der Scan insofern bezogen auf diese Werkzeugaufnahme vorgenommen wird, können Ungenauigkeit bei der Lagerung zwischen Halter und Bissgabel das Scanergebnis verfälschen.

Das Referenzelement 97 kann in beliebiger geeigneter Weise ausgebildet sein. Bevorzugt weist es eine zweidimensional unverwechselbare Kennung auf, also beispielsweise nicht ein symmetrisches Kreuz oder dergleichen.

In vorteilhafter Ausgestaltung ist zusätzlich ein Auflösungs-Erfassungselement 99 vorgesehen, dass beispielsweise aus feinen Linien besteht, deren Unterscheidbarkeit es ermöglicht, eine Aussage dahingehend zu treffen, dass eine richtige Fokussierung auf das Okklusionom-Referenzelement 97 erfolgt ist.

## Patentansprüche

1. Okklusionom, mit einem Bissgabelansatz (34) und einem Extraoralbogen (12), die miteinander verbunden sind,
wobei der Extraoralbogen (12) als ein Referenzelement ausgebildet ist, der sich vertikal versetzt zu dem Bissgabelansatz (34) erstreckt, mindestens einen Vertikalschenkel und mindestens einen Horizontalschenkel aufweist und über ein Bipupillar-Gelenk (24) mit dem Bissgabelansatz (34) verbunden ist,
wobei zusätzlich zu dem Bipupillar-Gelenk (24) ein Camper-Gelenk (40) an dem Okklusionom vorgesehen ist, wobei das Camper-Gelenk (40), dessen Gelenkachse quer zu dem Bipupillar-Gelenk (24) ausgebildet ist, sich zwischen dem Bissgabelansatz (34) und dem Bipupillar-Gelenk (24) erstreckt, wobei ein Zapfen (42) zwischen den Gelenken (24, 40) angeordnet ist,
wobei mindestens ein Gelenk, insbesondere beide Gelenke, mit einer Winkelerfassungsvorrichtung (36, 50) vorgesehen ist, über welche die Winkel der mit dem Gelenk ineinander verbundenen und gegeneinander schwenkbaren Teile des Okklusionoms (10) erfassbar, insbesondere ablesbar sind,
wobei das Bipupillar-Gelenk (24) die Winkelstellung der Okklusionsebene zur Bipupillarlinie einzustellen und durch Fixierung zu erfassen erlaubt, **dadurch gekennzeichnet.**
**dass** das Campergelenk (40) aus einem ersten Teil (42) in Form des Zapfens und einem zweiten Teil (44) besteht, die über die Rändelmutter (46) entlang der Richtung der Schwenkachse des Campergelenks miteinander verschraubt sind und die Rändelmutter (46) die Einstellung der Reibkraft des ersten und zweiten Teils zueinander erlaubt.

2. Okklusionom nach Anspruch 1, **dadurch gekennzeichnet, dass** der Extraoralbogen (12) einen vertikalen Zeiger aufweist, der drehfest mit diesem verbunden ist und insbesondere über den Extraoralbogen (12) hinausgehend nach oben weist.

3. Okklusionom nach einem der vorhergehenden Ansprüche, **dadurch gekennzeichnet, dass** an dem Bissgabelansatz (34) ein Wechselanschluss für die wahlweise Aufnahme eines Abdruckmassenträgers oder einer Bissgabel angeordnet ist.

4. Okklusionom nach einem der vorhergehenden Ansprüche, **dadurch gekennzeichnet, dass** zusätzlich dem Bipupillar-Gelenk (24) ein Camper-Gelenk (40) an dem Okklusionom vorgesehen ist, wobei die Gelenkachsen dieser Gelenke sich rechtwinklig zueinander erstrecken.

5. Okklusionom nach Anspruch 1 oder 4 , **dadurch gekennzeichnet, dass** das Camper-Gelenk (40) Anschläge aufweist, die die Auslenkung des Bissgabelansatzes (34) gegenüber dem Zapfen auf einen Schwenkwinkel von weniger als ± 30 Grad, insbesondere weniger als ± 20 Grad und bevorzugt -17 bis +9 Grad beschränken.

6. Okklusionom nach einem der vorhergehenden Ansprüche, **dadurch gekennzeichnet, dass** der Bissgabelansatz (34) über das Camper-Gelenk (40) schwenkbar an dem
Zapfen gelagert ist, der sich zu dem Bipupillar-Gelenk (24) hin erstreckt, wobei insbesondere die Achsen der beiden Gelenke sich senkrecht zueinander erstrecken.

7. Okklusionom nach einem der vorhergehenden Ansprüche, **dadurch gekennzeichnet, dass** mindestens ein Gelenk ein Fixiermittel aufweist, insbesondere eine Rändelmutter (39, 46) (39), über welche eine vorgegebene Schwenkstellung nach Wahl des Benutzers fixierbar ist.

8. Okklusionom nach einem der vorhergehenden Ansprüche, **dadurch gekennzeichnet, dass** mindestens ein Gelenk, insbesondere beide Gelenke, mit einer Skala und einem Zeiger versehen sind, über welche die Winkelstellung bei einer vorgegebenen Drehposition ablesbar ist.

9. Okklusionom nach einem der vorhergehenden Ansprüche, **dadurch gekennzeichnet, dass** das Camper-Gelenk (40) die Winkelstellung der Okklusionsebene zur Camperschen Ebene einzustellen und nach Fixierung zu erfassen erlaubt.

10. Okklusionom nach einem der vorhergehenden Ansprüche, **dadurch gekennzeichnet, dass** für die vertikal versetzte Lagerung des Extraoralbogens (12) an dem Bissgabelansatz (34) mindestens ein, insbesondere 2 sich vertikal erstreckende Stützschenkel ausgebildet sind.

11. Okklusionom nach einem der Ansprüche 1 bis 9 , **dadurch gekennzeichnet, dass** der Vertikalversatz zwischen Extraoralbogen (12) und Bissgabelansatz einstellbar ist, insbesondere um eine Mittelstellung von 25mm zwischen 18mm und 31mm.

12. Okklusionom nach einem der vorhergehenden Ansprüche, **dadurch gekennzeichnet, dass** der Extraoralbogen (12) zwei mal zueinander gegensinnig im Wesentlichen rechtwinklig abgebogen ist und an dieser Stelle die vertikal sich erstreckenden Stützschenkel (19, 20) ausbildet.

13. Okklusionom nach einem der vorhergehenden Ansprüche, **dadurch gekennzeichnet, dass** der Extraoralbogen (12), insbesondere an seinen vorderen/äußeren Ecken, Gelenke mit einer vertikalen Achse aufweist, über welche Seitenschenkel (14, 16) des Extraoralbogens (12) gegeneinander verschwenkbar sind.

14. Okklusionom nach Anspruch 10, **dadurch gekennzeichnet, dass** die Stützschenkel Teil eines Blechstreifens sind, der den Extraoralbogen (12) ausbildet.

15. Okklusionom nach einem der vorhergehenden Ansprüche, **dadurch gekennzeichnet, dass** der Extraoralbogen (12) mindestens ein Referenzelement an einer vorgegebenen Stelle trägt, über welches durch eine extrakorporale Erfassung die Lage des Extraoralbogens bezogen auf den Patienten erfassbar ist.

## Claims

1. An occlusion determination device, comprising a bite frame (34) and an extraoral bracket (12) which are connected to one another,
wherein the extraoral bracket (12) is configured as a reference element which extends vertically offset relative to the bite frame (34), comprises at least one vertical leg and at least one horizontal leg and is connected with the bite frame (34) by way of a bipupillary joint (24),
wherein in addition to the bipupillary joint (24) a Camper's joint (40) is provided on the occlusion determination device, wherein the Camper's joint (40), the joint axis of which is configured transversely to the bipupillary joint (24), extends between the bite frame (34) and the bipupillary joint (24), wherein a pin (42) is disposed between the joints (24, 40),
wherein at least one joint, in particular both joints, are provided with an angular detection device (36, 50) via which the angles of the parts of the occlusion determination device (10) which are connected to one another by the joint and pivotable against each other are detectable, in particular readable,
wherein the bipupillary joint (24) allows an adjustment of the angular position of the occlusal plane relative to the bipupillary line and a detection by fixation, **characterized in that**
the Camper's joint (40) consists of a first part (42) in the form of a pin and a second part (44), which are screwed together by means of the knurled nut (46) along the direction of the pivot axis of the Camper's joint and that the knurled nut (46) allows an adjustment of the friction force of the first and second part relative to each other.

2. The occlusion determination device according to claim 1, **characterized in that** the extraoral bracket (12) comprises a vertical pointer which is connected to it nonrotatably and in particular points to the top beyond the extraoral bracket (12).

3. The occlusion determination device according to any of the previous claims, **characterized in that** an alternating connection is disposed at the bite frame (34) for receiving either an impression compound carrier or a bite fork.

4. The occlusion determination device according to any of the previous claims, **characterized in that** in addition to the bipupillary joint (24) the occlusion determination device is provided with a Camper's joint (40), wherein the joint axes of these joints extend at right angles to one another.

5. The occlusion determination device according to claim 1 or 4, **characterized in that** the Camper's joint (40) comprises stops which limit the deflection of the bite frame (34) compared to the pin to a pivot angle of less than ± 30 degrees, in particular less than ± 20 degrees and preferably -17 to +9 degrees.

6. The occlusion determination device according to any of the previous claims, **characterized in that** the bite frame (34) is mounted to the pin pivotably via the Camper's joint (40), said pin extending to the bipupillary joint (24), wherein in particular the axes of both joints extend perpendicularly to each other.

7. The occlusion determination device according to any of the previous claims, **characterized in that** at least one joint comprises a fixative, in particular a knurled nut (39, 46) (39) which is used to fix a predefined pivot position at the discretion of the user.

8. The occlusion determination device according to any of the previous claims, **characterized in that** at least one joint, in particular both joints, comprise a scale and a pointer via which the angular position is readable at a predefined rotary position.

9. The occlusion determination device according to any of the previous claims, **characterized in that** the Camper's joint (40) allows for an adjustment of the angular position of the occlusal plane relative to the Camper's plane and a detection upon fixation.

10. The occlusion determination device according to any of the previous claims, **characterized in that** at least one, in particular 2, vertically extending support legs are formed for the vertically offset mounting of the extraoral bracket (12) to the bite frame (34).

11. The occlusion determination device according to any of the claims 1 to 9, **characterized in that** the vertical offset between the extraoral bracket (12) and the bite frame is adjustable, in particular around a center position of 25mm between 18mm and 31mm.

12. The occlusion determination device according to any of the previous claims, **characterized in that** the extraoral bracket (12) is counter-bent twice substantially at a right angle and forms the vertically extending support legs (19, 20) at this position.

13. The occlusion determination device according to any of the previous claims, **characterized in that** the extraoral bracket (12), in particular at its front/external edges, comprises joints having a vertical axis via which side legs (14, 16) of the extraoral bracket (12) are pivotable against one another.

14. The occlusion determination device according to claim 10, **characterized in that** the support legs are part of a metal strip which configures the extraoral bracket (12).

15. The occlusion determination device according to any of the previous claims, **characterized in that** the extraoral bracket (12) supports at least one reference element at a predefined position via which the location of the extraoral bracket relative to the patient can be detected by extracorporeal detection.

## Revendications

1. Occlusionome, avec un appendice de fourchette d'enregistrement (34) et un arc extra-oral (12) relié entre eux
où l'arc extra-total (12) est formé comme un élément de référence qui s'étend en décalage vertical par rapport à la base de la fourchette d'enregistrement (34), présente au moins une branche verticale et au moins une branche horizontale et est relié par une articulation bipupillaire (24) à la base de la fourchette d'enregistrement (34),
où, en plus de l'articulation bipupillaire (24), une articulation de Camper (40) est prévue au niveau de l'occlusionome, dans laquelle l'articulation de Camper (40), dont l'axe articulaire est formé transversalement à l'articulation bipupillaire (24), s'étend entre la fixation de la fourchette d'enregistrement (34) et l'articulation bipupillaire (24), où un cône (42) est disposé entre les articulations (24, 40),
où au moins une articulation, en particulier les deux articulations, est munie d'un dispositif de détection d'angle (36, 50), par lequel les angles des parties de l'occlusionome (10) reliées entre elles par l'articulation et pouvant pivoter l'une par rapport à l'autre sont détectables, en particulier lisibles,
où l'articulation bipupillaire (24) permet d'ajuster la position angulaire du plan d'occlusion à la ligne bipupillaire et de la détecter par fixation, **caractérisée en ce que**,
l'articulation de Camper (40) se compose d'une première partie (42) sous la forme du cône et d'une deuxième partie (44), qui sont vissées ensemble par l'écrou moleté (46) le long de la direction de l'axe pivotant de l'articulation de Camper et de l'écrou moleté 46) permet l'ajustement de la force de frottement de la première et de la deuxième partie l'une par rapport à l'autre.

2. Occlusionome selon la revendication 1, **caractérisé en ce que** l'arc extra-oral (12) présente un pointeur vertical qui est relié à celui-ci de manière solidaire en rotation et qui est en particulier dirigé vers le haut en dépassant l'arc extra-oral (12).

3. Occlusionome selon l'une des revendications précédentes, **caractérisé en ce qu'**une connexion alternée pour la réception facultative d'un porteur de masse d'impression ou d'une fourchette d'enregistrement est disposée au niveau de la base de la fourchette d'enregistrement (34).

4. Occlusionome selon l'une des revendications précédentes, **caractérisé en ce que**, en plus de l'articulation bipupillaire (24) une articulation de Camper (40) est prévue sur l'occlusionome, où les axes articulaires de ces articulations s'étendent perpendiculairement l'un à l'autre.

5. Occlusionome selon la revendication 1 ou 4, **caractérisé en ce que** l'articulation de Camper (40) présente des butées qui limitent la déviation de la fixation de la fourchette d'enregistrement (34) par rapport au cône à un angle de pivotement inférieur à ± 30 degrés, en particulier inférieur à ± 20 degrés et de préférence -17 à +9 degrés.

6. Occlusionome selon l'une des revendications précédentes, **caractérisé en ce que** la fixation de la fourchette d'enregistrement (34) est montée pivotant sur le cône par l'articulation de Camper (40), qui s'étend jusqu'à l'articulation bipupillaire (24), où en particulier les axes des articulations des deux articulations s'étendent perpendiculairement entre eux.

7. Occlusionome selon l'une des revendications précédentes, **caractérisé en ce qu'**au moins une articulation présente un moyen de fixation, en particulier un écrou moleté (39, 46) (39), par lequel une position de pivotement prédéterminée peut être fixée au choix de l'utilisateur.

8. Occlusionome selon l'une des revendications précédentes, **caractérisé en ce qu'**au moins une articulation, en particulier les deux articulations, sont pourvues d'une échelle graduée et d'une aiguille permettant de lire la position angulaire pour une position de rotation prédéfinie.

9. Occlusionome selon l'une des revendications précédentes, **caractérisé en ce que** l'articulation de Camper (40) permet de régler la position angulaire du plan d'occlusion par rapport au plan de Camper et de l'enregistrer après fixation.

10. Occlusionome selon l'une quelconque des revendications précédentes, **caractérisé en ce que** pour le montage décalé verticalement de l'arc extra-oral (12) au niveau de la fixation de la fourchette d'enregistrement (34), au moins une, en particulier 2 branches de support s'étendant verticalement sont formées.

11. Occlusionome selon l'une des revendications 1 à 9, **caractérisé en ce que** le décalage vertical entre l'arc extra-oral (12) et la fixation de la fourchette d'enregistrement est réglable, en particulier autour d'une position médiane de 25mm entre 18mm et 31mm.

12. Occlusionome selon l'une des revendications précédentes, **caractérisée en ce que** l'arc extra-oral (12) est plié deux fois en sens inverse l'un de l'autre, essentiellement à angle droit, et forme à cet endroit les branches de support (19, 20) s'étendant verticalement.

13. Occlusionome selon l'une des revendications précédentes, **caractérisée en ce que** l'arc extra-oral (12) présente, en particulier au niveau de ses coins avant/extérieurs, des articulations avec un axe vertical, par l'intermédiaire desquelles des branches latérales (14, 16) de l'arc extra-oral (12) peuvent pivoter les unes par rapport aux autres.

14. Occlusionome selon la revendication 10, **caractérisé en ce que** les branches de support font partie d'une bande de tôle qui forme l'arc extra-oral (12).

15. Occlusionome selon l'une des revendications précédentes, **caractérisé en ce que** l'arc extra-oral (12) porte au moins un élément de référence à un endroit prédéterminé, sur lequel la position de l'arc extra-oral par rapport au patient peut être détectée par une détection extracorporelle.
